# EUROPÄISCHE PATENTSCHRIFT

(11) **EP 1 951 182 B1**
(45) Veröffentlichungstag und Bekanntmachung des Hinweises auf die Patenterteilung: **30.07.2014**
(21) Anmeldenummer: 06829989.0
(22) Anmeldetag: 14.11.2006
(51) Int. Cl.: A61J 3/07, B65B 1/16, B65B 1/36, G01F 11/24

(54) **VORRICHTUNG ZUM GLEICHMÄSSIGEN BEFÜLLEN ODER ENTLEEREN VON DOSIERKAMMERN**
DEVICE FOR EVENLY FILLING OR EMPTYING DOSING CHAMBERS
DISPOSITIF POUR REMPLIR UNIFORMEMENT OU VIDER DES CHAMBRES DE DOSAGE

(30) Priorität: 18.11.2005 DE 102005055056; 04.01.2006 DE 102006000748
(43) Veröffentlichungstag der Anmeldung: 06.08.2008
(73) Patentinhaber: ROBERT BOSCH GMBH, 70442 Stuttgart (DE)
(72) Erfinder: SCHLIPF, Jens, 71691 Freiberg A. N. (DE); SCHMIED, Ralf, 71691 Freiberg (DE); BOEHRINGER, Walter, 73630 Remshalden (DE); FRANCK, Thomas, 73547 Lorch-Weitmars (DE)
(86) Internationale Anmeldenummer: PCT/EP2006/068431
(87) Internationale Veröffentlichungsnummer: WO 2007/057386

(56) Entgegenhaltungen:
- WO-A-02/15839
- WO-A-83/02434
- DE-A1- 4 343 317
- DE-A1- 19 743 088

## Beschreibung

### Stand der Technik

Die Erfindung geht aus von einer Vorrichtung zum gleichmäßigen Befüllen oder Entleeren von Dosierkammern nach der Gattung des unabhängigen Anspruchs.

Aus der DE 197 43 0888 A1 ist bereits eine Dosiervorrichtung bekannt. Sie besteht aus einer umlaufenden Dosierscheibe mit auf einem Teilkreis in Gruppen angeordneten, als Durchbrüche ausgebildeten Dosierkammern. Um die untere Öffnung der Dosierkammern zu verschließen, sind an der Unterseite der Dosierscheibe Schieber mit Durchbrüchen verschiebbar gelagert, die in der Füllstellung die Dosierkammern verschließen und diese in der Entleerstellung öffnen. Die Schieber werden von durch einem in der Füllstellung gehaltenen Kulissenstück und von einem gesteuerten Hebel in die Entleerstellung gedrückt. Das abzumessende und abzufüllende Produkt wird auf die Oberseite der Dosierscheibe aufgegeben, von wo aus mittels Stopfstempel beim Umlaufen der Dosierscheibe in deren Dosierkammern eingestopft wird, wobei sich die Schieber in ihrer Schließstellung befinden. Insbesondere bei kleinen zu dosierenden Mengen ist eine homogene Befüllung schwierig. Es können sich so genannte Produktbrücken bilden.

Aus der WO-A-02/15839 sind bereits ein Verfahren und eine Vorrichtung zur Abfüllung von Behältern bekannt. Eine Befülleinrichtung wirkt unmittelbar auf eine Dosieröffnung, die in einer verschieblichen Dosierplatte angeordnet ist. Unterhalb der Dosierplatte im Bereich der Dosieröffnung ist ein gegenüber der Dosierplatte feststehender Filter angeordnet, an den Unterdruck angelegt werden kann. Eine zu befüllende Kapsel befindet sich in einem Dosierrad, welches unterhalb der Dosierplatte angeordnet ist. Um die gefüllte Bohrung der Dosierplatte zu entleeren, wird die Dosierplatte in die entsprechende Position verschoben, sodass sich die Dosieröffnung oberhalb der Behältnisaufnahme im Dosierrad befindet. Gegebenenfalls unter Unterstützung eines Injektors wird die gefüllte Dosierbohrung in das Kapselunterteil entleert.

Es ist Aufgabe der Erfindung, die vorgenannten Nachteile zu beseitigen oder zumindest zu reduzieren. Diese Aufgabe wird durch die Merkmale des unabhängigen Anspruchs gelöst.

### Offenbarung der Erfindung

Die erfindungsgemäße Vorrichtung mit den kennzeichnenden Merkmalen des Anspruchs 1 hat den Vorteil, dass das zu dosierende Gut beispielsweise durch Vakuumbohrungen in die Dosierkammern homogen eingesaugt wird. Dadurch wird es möglich, dass sehr kleine Dosierkammern homogen mit Pulver oder Pellets befüllt werden können, ohne Produktbrücken zu bilden. Es lassen sich sehr genau kleine Mengen dosieren, ohne einen festen Pulverpressling zu bilden.

Erfindungsgemäß ist vorgesehen, dass ein Filtermittel gegenüber der Dosierkammer beweglich angeordnet ist. Dadurch wird sichergestellt, dass nach erfolgter Dosierung das Gut nach unten in das zu befüllende Behältnis gebracht werden kann. Das Abfüllen wird auch durch die Schwerkraft unterstützt. Zweckmäßig kann das Abfüllen durch Ausblasluft oder Übergabestempel unterstützt werden.

Erfindungsgemäß ist ferner vorgesehen, dass die Dosierkammer über das Filtermittel mit zumindest einer Über- oder Unterdruckerzeugungseinrichtung verbindbar ist. Durch Anlegen eines Unterdrucks wird das zu dosierende Gut in die Dosierkammer gebracht. Zur Reinigung des Filtermittels kann andererseits auch ein Überdruck-Impuls angelegt werden, wodurch sich die Dosiergenauigkeit verbessert. Dadurch wird ein Zusetzen der Poren des Filters verhindert, sodass zuverlässig auch für nachfolgende Dosiervorgänge die Dosierkammer mit Unterdruck beaufschlagt werden kann.

In einer zweckmäßigen Weiterbildung ist vorgesehen, dass mehrere Dosierkammern an ihren Unterseiten von einem Filter überdeckt werden, wobei der Filter in einer Ausnehmung angeordnet ist, die mit Unter- bzw. Überdruck beaufschlagbar ist. Dadurch wird die Bauform der Dosiervorrichtung vereinfacht und es können gleichzeitig mehrere Produktportionen dosiert werden.

In einer zweckmäßigen Weiterbildung ist vorgesehen, die gefüllte Dosierkammer mittels Druckluftimpuls oder durch Übergabestempel ins Kapselunterteil zu übergeben. Dadurch beschleunigt sich der Abfüllvorgang. Es verbleibt kein Produkt in der zu entleerenden Dosierkammer.

Weitere zweckmäßige Weiterbildungen ergeben sich aus weiteren abhängigen Ansprüchen und aus der Beschreibung.

### Zeichnung

Ein Ausführungsbeispiel der Erfindung ist in der Zeichnung dargestellt und wird im Folgenden näher beschrieben. Es zeigen:
- Figur 1: eine Draufsicht auf eine Dosierscheibe,
- Figur 2: eine Schnittansicht durch die Dosiervorrichtung entlang des Schnitts C-C,
- Figur 3: eine weitere Schnittansicht durch die Dosiervorrichtung,
- Figur 4: eine Detailansicht aus der Figur 3 sowie
- Figur 5: ein alternatives Ausführungsbeispiel zum Ausblasen der Übergabebohrung.

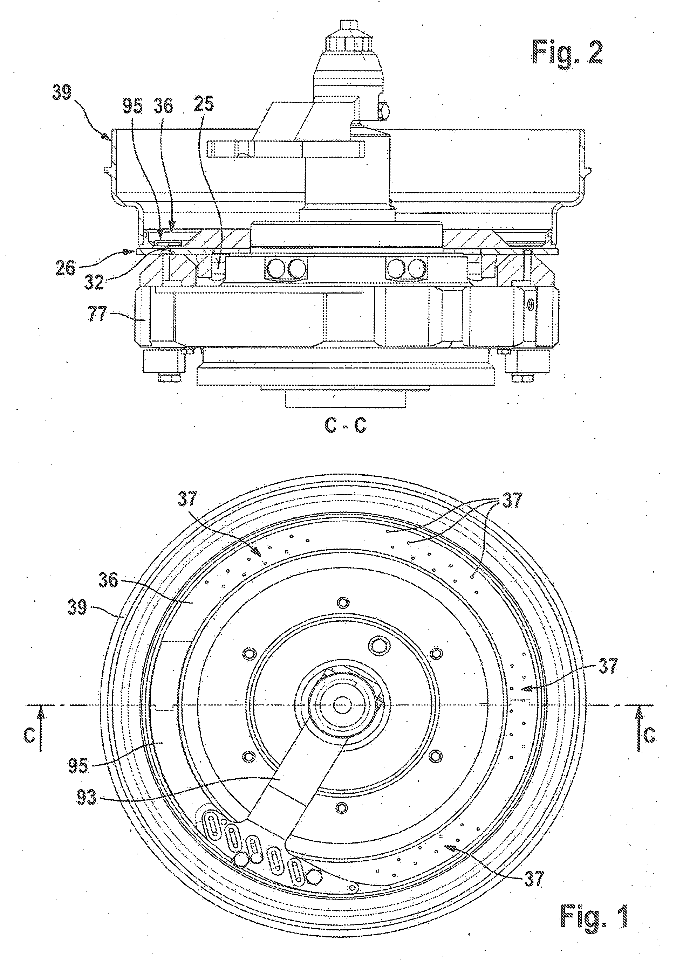

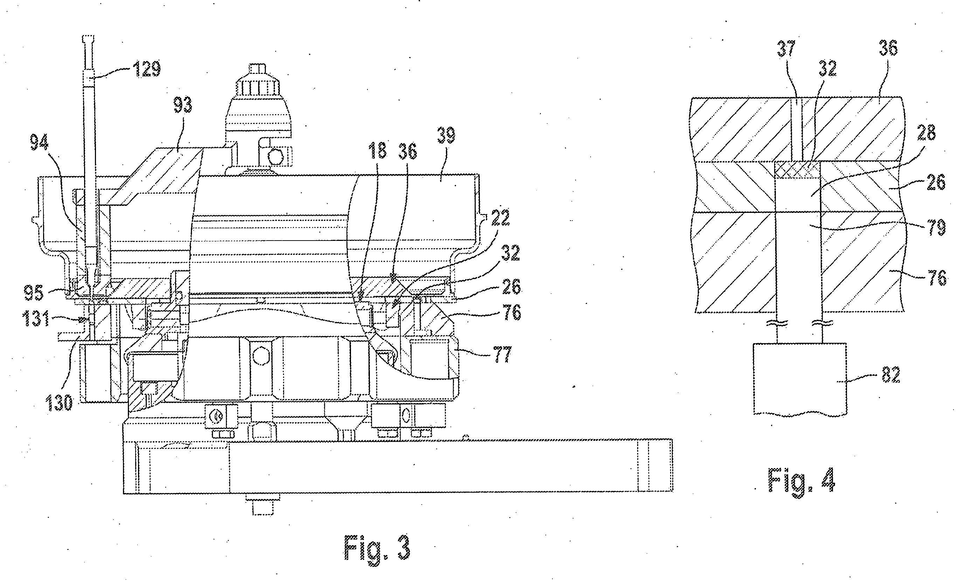

Die dargestellte Vorrichtung zum gleichmäßigen Befüllen oder Entleeren von Dosierkammern dient insbesondere zum Dosieren kleiner Gutmengen wie medizinische Pulver, Granulate und dergleichen schüttbarer Produkte und zum Abfüllen dieser in vorzugsweise Hartgelatinekapseln. Eine Dosierscheibe 36 wird durch einen umlaufenden Rand 39 begrenzt. Am Boden der Dosierscheibe 36 sind eine Reihe von Dosierkammern 37 angeordnet. In den von Ring 39 und Unterseite der Dosierscheibe 36 gebildeten Raum wird das zu dosierende Gut gebracht. Die Dosierscheibe 36 wird an einer nicht näher bezeichneten senkrechten Welle befestigt und wird schrittweise um je einen bestimmten Winkel gedreht. Über einen Haltearm 93 ist ein bogenförmiger Abstreifer 95 befestigt, der gegenüber der Dosierscheibe 36 feststehend angeordnet ist. Die Lage des Abstreifers 95 lässt sich auch Figur 2 entnehmen. Unterhalb der Dosierscheibe 36 ist ein Schieber 26 beweglich gegenüber der Dosierscheibe 36 angeordnet. Der Schieber 26 ist mit einer oder mehreren Schieberbohrungen 28 versehen, an deren Oberseite ein Filtersystem 32 angeordnet ist. In der dargestellten Befüllposition befindet sich das Filtersystem 32 unmittelbar unterhalb zumindest einer Dosierkammer 37. In der Befüllstellung kann von einer Über- oder Unterdruckerzeugungseinrichtung 82 über eine Auflageringbohrung 79 eines Auflagerings 76 und die Schieberbohrung 28 und das Filtersystem 32 ein Unterdruck in der zumindest einen Dosierkammer 37 erzeugt werden. Auf der linken Seite der Figur 3 ist die Übergabepo- _ sition gezeigt. Ein Übergabestempel 129 befördert die in der Dosierkämmer 37 befindliche Menge des dosierten Guts in ein Kapselunterteil 131, welches in einem Unterteilsegment 130 zur Aufnahme des Produkts bereit steht. Ein Flansch 18 bildet eine Führung für den Schieber 26. Der Schieber 26 wird gehalten durch den Schieberhalter 22.

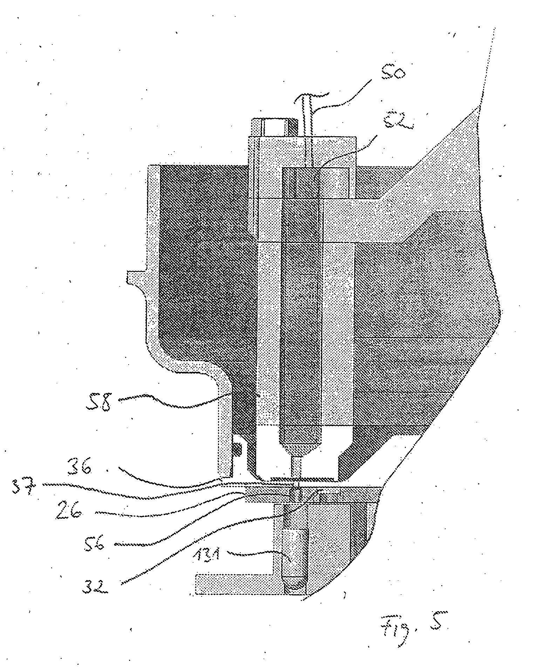

Bei dem Ausführungsbeispiel gemäß Figur 5 ist ein Druckluftanschluss 50 vorgesehen, über den Druckluft in eine Druckluftkammer 52 eingebracht werden kann. Diese Druckluftkammer 52 ist in einem Abstreifer 58 integriert in der Weise, dass ein oder mehrere Druckluftimpulse in die mit Pulver befüllte Dosierkammer 37 eingebracht werden können zum Entleeren des darin befindlichen Pulvers in das darunter angeordnete Kapselunterteil 131 über die Übergabebohrung 56. Die Übergabebohrung 56 ist wiederum in dem beweglichen Schieber 26 angeordnet, ebenso wie das Filtersystem 32.

Die Vorrichtung zum gleichmäßigen Befüllen oder Entleeren von Dosierkammern 37 arbeitet wie folgt. Die Dosierkammern 37 sind vorzugsweise als Bohrungen in der Dosierscheibe 36 ausgeführt. Hierbei definieren Durchmesser und Tiefe der Bohrung bzw. Dicke der Dosierscheibe 36 die zu dosierende Menge. Das Filtersystem 32 schließt bündig mit der Oberfläche des Schiebers 26 ab. Wesentlich ist, dass über beispielsweise die Schieberbohrung 28 und das Filtersystem 32 ein Vakuum an die Dosierkammer 37 angelegt werden kann bzw. ein Unterdruck erzeugt werden kann, um dadurch das zu dosierende Produkt in die Dosierkammer 37 zu bringen. Im Ausführungsbeispiel erfolgt dies beispielhaft durch die Unterdruckerzeugungseinrichtung 82. Das zu dosierende Gut, wie beispielsweise Pulver, wird in einem Pulvertopf der Dosierscheibe 36 durch Drehbewegungen, unter Umständen getaktet, im Kreis bewegt. Den Boden des Topfes bildet die Dosierscheibe 36, die mehrere Bohrungen als Dosierkammern 37 aufweist. In der Dosierstellung befindet sich unterhalb der zu befüllenden Dosierkammern 37 das Filtersystem 32. Weiterhin liegt der Schieber 26 auf dem Auflagering 76 plan auf, sodass die Auflageringbohrungen 79 sowie die Schieberbohrungen 28 mit dort angeordneten Filtersystem 32 und die Dosierkammern 37 aufeinander ausgerichtet sind. Im ersten Schritt wird nun ein Vakuum an die Dosierkammern 37 angelegt. Dadurch wird das Pulver in die Dosierkammern 37 eingesaugt. Dies kann gegebenenfalls mehrfach wiederholt werden. Im darauf folgenden Schritt wird das überflüssige Pulver als Beispiel für ein zu dosierendes Gut auf der Dosierscheibenoberfläche durch den Abstreifer 95 sauber abgerakelt. Der Schieber 26 bewegt sich in Richtung Zentrum und bringt seine Übergabebohrungen in Überdeckung mit denen der Dosierscheibe 36. Dadurch kann der Übergabestempel 129 in gerader Linie nach unten das Pulvervolumen, das nicht schon durch die Schwerkraft in das Kapselunterteil 131 ausgefallen ist, vollends sicher aus der Dosierscheibe 36 heraus übergeben. Zusätzlich könnte das zu befüllende Pulver mittels Druckluftimpuls aus der Dosierkammer 37 in das Kapselunterteil 131 gebracht werden, wie dies durch die Vorrichtung nach Figur 5 ermöglicht wird. Im nächsten Schritt wird der Schieber 26 wieder verschlossen, d. h. die Übergabebohrungen befinden sich nicht mehr in Überdeckung mit den Dosierkammern 37. Die Dosierscheibe 36 dreht sich mit dem Schieber 26 unter dem Abstreifer 95 um einen Takt, beispielsweise ein Sechstel, weiter, sodass dort das in den Filterporen des Filtersystems 32 befindliche Feinstprodukt wieder ausgeblasen werden kann. Dies erfolgt dadurch, dass über Öffnungen 79, 28 ein Überdruck auf das Filtersystem 32 ausgeübt wird. Durch diesen Reinigungszyklus wird ein Zusetzen der Poren des Filtersystems 32 über längere Zeit verhindert. Zudem liegt ein Vorteil des Verfahrens darin, dass das ausgeblasene Produkt keinen Abfall darstellt, sondern wieder in den Produktfluss zugeführt werden kann.

Das Ausführungsbeispiel nach Figur 5 dient der gezielten Entleerung einer befüllten Dosierkammer 37. Druckluft wird über den Druckluftanschluss 50 in die in dem Abstreifer 58 angeordnete Druckluftkammer 52 kontinuierlich oder impulsartig zugeführt. Befindet sich nun der Schieber 26 in der Übergabepösition (Übergabebohrung 56 liegt zwischen Dosierkammer 37 und Kapselunterteil 131), wird das in der Dosierkammer 37 befindliche Pulver durch den aufgebrachten Druck ausgeblasen und fällt durch die Übergabebohrung 56 in das abzufüllende, bereitstehende Kapselunterteil 131. Dadurch wird die Dosierkammer 37 komplett entleert, es gibt keine Prodüktrückstände.

Es sind unterschiedliche Ausgestaltungen denkbar. So könnte für jede Dosierkammer ein separater Filter 32 vorgesehen werden, der die Unterseite der Dosierkammer 37 vollständig überdeckt. Ebenfalls wäre es denkbar, in dem Schieber 26 eine Ausnehmung derart vorzusehen, dass sie die Dosierkammern 37 einer Gruppe überdeckt. Diese Ausnehmung kann durch die Unterdruckerzeugungseinrichtung 82 mit Unterdruck beaufschlagt werden. Wird der Schieber 26 in die Dosierstellung bewegt, so überdecken die Filter 32 die Dosierkammern 37. Wird nun das Vakuum an die Ausnehmung angelegt, wird das zu dosierende Gut in die Dosierkammern 37 eingesaugt. Durch das Vorsehen nur einer einzigen Ausnehmung reduziert sich die Komplexität der Dosiervorrichtung.

Das Filtersystem 32 muss so ausgelegt sein, dass es einerseits zulässt, dass die Dosierkammer 37 mit Unterdruck beaufschlagt wird. Andererseits muss es sicher das zu dosierende Gut in der Dosierkammer 37 zurückhalten und verhindern, dass es in die Schieberbohrung 28 gelangt. Vorzugsweise wird das Filtersystem 32 an der Unterseite der Dosierkammer 37 anzuordnen sein. In diesem Fall muss das Filtersystem 32 zur einfachen Entnahme des dosierten Guts beweglich ausgebildet sein, um ein Ausfallen des Produkts nach unten zu ermöglichen. Andererseits ist jedoch eine nicht erfindungsgemäße Konstruktion denkbar, dass das Filtersystem 32 seitlich in der Wand und der Dosierkammer 37 integriert ist, insbesondere im unteren Bereich, um so das Produkt anzusaugen. Dann könnte auf die Bewegbarkeit des Filtersystems 32 verzichtet werden.

## Patentansprüche

1. Vorrichtung zum gleichmäßigen Befüllen oder Entleeren von zumindest einer Dosierkammer, mit zumindest einer in einer Dosierscheibe (36) angeordneten Dosierkammer (37), in die das zu befüllende oder zu entleerende Gut zu bringen ist, wobei Druckerzeugungsmittel (50, 52, 81, 82) vorgesehen sind zur Beaufschlagung der Dosierkammer (37) mit einem bestimmten Druck zum Befüllen oder Entleeren der Dosierkammer (37), wobei zumindest ein Filtermittel (32) vorgesehen ist, über welches die Dosierkammer (37) mit einem bestimmten Druck beaufschlagbar ist, **dadurch gekennzeichnet, dass** das Filtermittel (32) in einem Schieber (26) angeordnet ist, der gegenüber der Dosierscheibe (37) bewegbar angeordnet ist und der Schieber (26) zumindest eine Übergabebohrung (28) aufweist, durch die das dosierte Gut in ein Behältnis (131), wie beispielsweise ein Kapselunterteil, gelangt.

2. Vorrichtung nach dem vorhergehenden Anspruch, **dadurch gekennzeichnet, dass** das Filtermittel (32) an der Unterseite der Dosierkammer (37) angeordnet ist.

3. Vorrichtung nach einem der vorhergehenden Ansprüche, **dadurch gekennzeichnet, dass** in dem Schieber (26) eine Schieberbohrung (28) vorgesehen ist, in der das Filtermittel (32) angeordnet ist.

4. Vorrichtung nach einem der vorhergehenden Ansprüche, **dadurch gekennzeichnet, dass** auf das Filtermittel (32) ein Überdruck einwirkt zur Reinigung des Filtermittels (32).

5. Vorrichtung nach einem der vorhergehenden Ansprüche, **dadurch gekennzeichnet, dass** mehrere Dosierkammern (37) in der Dosierscheibe (36) angeordnet sind, die von einem oder mehreren Filtermittel (32) überdeckbar sind.

6. Vorrichtung nach einem der vorhergehenden Ansprüche, **dadurch gekennzeichnet, dass** mehrere Dosierkammern (37) an ihren Unterseiten durch ein oder mehrere Filtermittel (32) überdeckbar sind, wobei die Filtermittel (32) in einer Ausnehmung (28) des Schiebers (26) angeordnet sind, die mit Unter- bzw. Überdruck beaufschlagbar ist.

7. Vorrichtung nach einem der vorhergehenden Ansprüche, **dadurch gekennzeichnet, dass** eine Druckluftkammer (50) vorgesehen ist, über welche die Dosierkammer (37) mit einem bestimmten Druck beaufschlagbar ist.

8. Vorrichtung nach einem der vorhergehenden Ansprüche, **dadurch gekennzeichnet, dass** die Druckluftkammer (50) in einem Abstreifer (58) angeordnet ist.

## Claims

1. Device for evenly filling or emptying at least one dosing chamber, having at least one dosing chamber (37) which is arranged in a dosing disc (36) and into which the substance which is to be introduced or emptied can be loaded, wherein pressure-generating means (50, 52, 81, 82) are provided for subjecting the dosing chamber (37) to a certain pressure for filling or emptying the dosing chamber (37), wherein at least one filter means (32) is provided, via which the dosing chamber (37) can be subjected to a certain pressure, **characterized in that** the filter means (32) is arranged in a slide (26), which is arranged such that it can be moved in relation to the dosing disc (36), and the slide (26) has at least one transfer bore (28), through which the dosed substance passes into a container (131), for example a lower capsule part.

2. Device according to the preceding claim, **characterized in that** the filter means (32) is arranged on the underside of the dosing chamber (37).

3. Device according to one of the preceding claims, **characterized in that** the slide (26) contains a slide bore (28), in which the filter means (32) is arranged.

4. Device according to one of the preceding claims, **characterized in that** a positive pressure acts on the filter means (32) in order to clean the filter means (32).

5. Device according to one of the preceding claims, **characterized in that** a plurality of dosing chambers (37) are arranged in the dosing disc (36) and can be covered over by one or more filter means (32).

6. Device according to one of the preceding claims, **characterized in that** a plurality of dosing chambers (37) can be covered over on their undersides by one or more filter means (32), wherein the filter means (32) are arranged in an aperture (28) of the slide (26), it being possible for said aperture to be subjected to negative pressure or positive pressure.

7. Device according to one of the preceding claims, **characterized by** the provision of a compressed-air chamber (50), via which the dosing chamber (37) can be subjected to a certain pressure.

8. Device according to one of the preceding claims, **characterized in that** the compressed-air chamber (50) is arranged in a stripping device (58).

## Revendications

1. Dispositif pour remplir uniformément ou vider au moins une chambre de dosage, comprenant au moins une chambre de dosage (37) disposée dans un disque de dosage (36), dans laquelle doit être introduit le produit à verser ou à vider, des moyens de génération de pression (50, 52, 81, 82) étant prévus pour solliciter la chambre de dosage (37) avec une pression déterminée pour remplir ou vider la chambre de dosage (37),
au moins un moyen de filtre (32) étant prévu, par le biais duquel la chambre de dosage (37) peut être sollicitée avec une pression déterminée,
**caractérisé en ce que** le moyen de filtre (32) est disposé dans un coulisseau (26) qui est disposé de manière déplaçable par rapport au disque de dosage (36) et le coulisseau (26) présente au moins un alésage de transfert (28) à travers lequel le produit dosé parvient dans un récipient (131), comme par exemple une partie inférieure de capsule.

2. Dispositif selon la revendication précédente, **caractérisé en ce que** le moyen de filtre (32) est disposé sur le côté inférieur de la chambre de dosage (37).

3. Dispositif selon l'une quelconque des revendications précédentes, caractérisé en qu'un alésage de coulisseau (28) est prévu dans le coulisseau (26), dans lequel est disposé le moyen de filtre (32).

4. Dispositif selon l'une quelconque des revendications précédentes, **caractérisé en ce qu'**une surpression agit sur le moyen de filtre (32) pour nettoyer le moyen de filtre (32).

5. Dispositif selon l'une quelconque des revendications précédentes, **caractérisé en ce que** plusieurs chambres de dosage (37) sont disposées dans le disque de dosage (36), lesquelles peuvent être recouvertes par un ou plusieurs moyens de filtre (32).

6. Dispositif selon l'une quelconque des revendications précédentes, **caractérisé en ce que** plusieurs chambres de dosage (37) peuvent être recouvertes au niveau de leurs côtés inférieurs par un ou plusieurs moyens de filtre (32), les moyens de filtre (32) étant disposés dans un évidement (28) du coulisseau (26), lequel peut être sollicité par une dépression ou une surpression.

7. Dispositif selon l'une quelconque des revendications précédentes, **caractérisé en ce qu'**il est prévu une chambre d'air comprimé (50) par le biais de laquelle la chambre de dosage (37) peut être sollicitée avec une pression déterminée.

8. Dispositif selon l'une quelconque des revendications précédentes, **caractérisé en ce que** la chambre d'air comprimé (50) est disposée dans un dispositif de grattage (58).
